# EUROPÄISCHE PATENTSCHRIFT

(11) **EP 3 602 028 B1**
(45) Veröffentlichungstag und Bekanntmachung des Hinweises auf die Patenterteilung: **10.03.2021**
(21) Anmeldenummer: 18730301.1
(22) Anmeldetag: 04.06.2018
(51) Int. Cl.: G01N 29/04, G01S 15/89, G01N 29/06, G01N 29/22, G01N 29/24, G01N 29/26, G01N 29/265, G01N 29/44

(54) **VERFAHREN ZUR ERSTELLUNG EINES AUSWERTEDATENSATZES FÜR EINE BEWERTUNG EINER ULTRASCHALLPRÜFUNG**
METHOD FOR CREATING AN ANALYSIS DATASET FOR AN EVALUATION OF AN ULTRASONIC TEST
PROCÉDÉ POUR CRÉER UN ENSEMBLE DE DONNÉES D'ANALYSE AFIN D'ÉVALUER UN CONTRÔLE PAR ULTRASONS

(30) Priorität: 22.06.2017 DE 102017210508
(43) Veröffentlichungstag der Anmeldung: 05.02.2020
(73) Patentinhaber: Siemens Energy Global GmbH & Co. KG, 81739 München (DE)
(72) Erfinder: MOOSHOFER, Hubert, 81541 München (DE); VRANA, Johannes, 80799 München (DE)
(86) Internationale Anmeldenummer: PCT/EP2018/064565
(87) Internationale Veröffentlichungsnummer: WO 2018/234022

(56) Entgegenhaltungen:
- WO-A1-2013/104525
- DE-A1- 4 416 829

## Beschreibung

Die Erfindung betrifft ein Verfahren zur Erstellung eines Auswertedatensatzes für eine Bewertung einer Ultraschallprüfung eines Objektes, insbesondere eines Bauteils. Weiterhin betrifft die Erfindung ein Verfahren zur Bewertung einer Ultraschallprüfung des Objektes, welche auf den erstellten Auswertedatensatz basiert.

Bei einer Ultraschallprüfung eines Objektes, insbesondere eines Bauteils, wird das zugehörige Prüfvolumen mittels verschiedener einzelner Ultraschallmessungen (Scans) und/oder verschiedener Prüfköpfe und/oder mittels verschiedener Einschallrichtungen geprüft. Insbesondere werden zur Erkennung von Defekten innerhalb des Objektes, welche eine zueinander verschiedene Orientierung aufweisen, mehrere Einschallwinkel bei der Ultraschallprüfung des Objektes verwendet. Hierzu sind insbesondere Sender-Empfänger-Prüfköpfe (abgekürzt SE-Prüfköpfe) sowie Einzelschwingerprüfköpfe vorgesehen. Weiterhin ist zur Erkennbarkeit beziehungsweise Detektion oberflächennaher Defekte, insbesondere von Rissen (Winkelspiegel) und Rissspitzen, transversal polarisierter Ultraschall (Transversalwellen) vorteilhaft.

Beispielsweise werden bei einer Ultraschallprüfung eines rotationssymmetrischen Objektes die Einschallrichtungen radial, axial, radial/tangential und axial/tangential unterschieden. Die axiale und axiale/tangentiale Ultraschallprüfung kann in Bezug auf das Objekt von zwei verschiedenen Seiten erfolgen. Die radiale Ultraschallprüfung erfolgt typischerweise vom Außendurchmesser oder Innendurchmesser des Objektes. Die radiale/tangentiale Ultraschallprüfung kann vom Außendurchmesser des Objektes erfolgen. Gleichermaßen kann bei jedem Scan der Ultraschallprüfung eine unterschiedliche Größe der Apertur verwendet werden. Hierbei kann die Größe der Apertur an den jeweiligen Scan angepasst sein.

Die bei der Ultraschallprüfung verwendeten Prüfköpfe können eine Fokussierung aufweisen. Alternativ können Prüfköpfe, die als sogenannte Phased-Array-Prüfköpfe ausgebildet sind, mit verschiedenen Ansteuerungen (englisch: Focal-Laws), beispielsweise verschiedenen Aperturen, verschiedenen Einschallwinkeln und/oder verschiedenen Fokussierungen, verwendet werden.

Basierend auf Messdatensätze, die mittels einer Ultraschallprüfung erfasst wurden, kann eine SAFT-Auswertung (Synthetische-Apertur-Fokus-Technik; abgekürzt SAFT) der Messdatensätze erfolgen. Hierbei wird durch die SAFT-Auswertung (englisch: Synthetic-Aperture-Focusing-Technique; abgekürzt SAFT) die Nachweisgrenze, die Defektbewertung und die Trennung von Gruppenanzeigen verbessert.

Typischerweise ist es bei einer Ultraschallprüfung erforderlich, einen vollständigen SAFT-ausgewerteten Messdatensatz zu analysieren, was mit einem entsprechend hohen Aufwand verbunden ist. Mit anderen Worten ist es erforderlich jede Ultraschallmessung einer Ultraschallprüfung einzeln zu analysieren, da die einzelnen Ultraschallmessungen - wie obenstehend beschrieben - mit verschiedenen Anforderungen und Ausgestaltungen erfolgt sein können. Dadurch wird die Auswertung der Ultraschallprüfung des Objektes deutlich erschwert

Ein Beispiel für ein derartiges Verfahren ist in der DE 44 16 829 A1 beschrieben.

Aus dem Stand der Technik sind verschiedene Ansätze zur Zusammenführung von einzelnen Ultraschallmessungen (Scans) bekannt, wobei die Ultraschallmessungen beispielsweise mit verschiedenen Prüfköpfen und/oder unter verschiedenen Bedingungen erfasst wurden. Nachteilig an den bekannten Verfahren ist, dass deren Ergebnis der Zusammenführung typischerweise schwer zu interpretieren ist. Insbesondere ist es problematisch zu erkennen, ob ein Defekt innerhalb des Objektes zulässig ist, das heißt, ob seine Defektgröße unterhalb einer zulässigen Defektgröße ist.

Der vorliegenden Erfindung liegt die Aufgabe zugrunde, einen einheitlichen Bezug zwischen wenigstens zwei Ultraschallmessungen herzustellen und somit eine Erstellung eines der Auswertung der Ultraschallprüfung zugrundeliegenden Auswertedatensatzes zu verbessern.

Die Aufgabe wird durch einen Gegenstand mit den Merkmalen des unabhängigen Patentanspruches 1 sowie durch ein Verfahren mit den Merkmalen des unabhängigen Patentanspruches 10 gelöst. In den abhängigen Patentansprüchen sind vorteilhafte Ausgestaltungen und Weiterbildungen der Erfindung angegeben.

Das erfindungsgemäße Verfahren zur Erstellung eines Auswertdatensatzes für eine Bewertung einer Ultraschallprüfung eines Objektes, insbesondere eines Bauteils, besonders bevorzugt eines rotationssymmetrischen Bauteils, umfasst wenigstens die folgenden Schritte:
- Bereitstellen eines ersten und zweiten Messdatensatzes, wobei jeder Messdatensatz auf wenigstens einer Ultraschallmessung eines Bereiches des Objektes und einer SAFT-Auswertung der Ultraschallmessung basiert;
- Zuordnen einer ersten Ersatzfehlergröße zu wenigstens einem Volumenelement des ersten Messdatensatzes, wobei das Volumenelement des ersten Messdatensatzes wenigstens einem Teil des Bereiches zugeordnet ist;
- Zuordnen einer zweiten Ersatzfehlergröße zu wenigstens einem Volumenelement des zweiten Messdatensatzes, wobei das Volumenelement des zweiten Messdatensatzes wenigstens dem Teil des Bereiches zugeordnet ist;
- Erstellen des Auswertedatensatzes mit wenigstens einem Volumenelement, das wenigstens dem Teil des Bereiches zugeordnet ist; und
- Zuordnen einer dritten Ersatzfehlergröße zum Volumenelement des Auswertedatensatzes, wobei die dritte Ersatzfehlergröße aus dem Maximum der ersten und zweiten Ersatzfehlergrößen gebildet wird.

Gemäß der vorliegenden Erfindung erfolgt eine Zusammenführung des ersten und zweiten Messdatensatzes zum Auswertedatensatz, wobei für die Zusammenführung des ersten und zweiten Messdatensatzes und somit für die Bildung der dritten Ersatzfehlergröße erfindungsgemäß die erste und zweite Ersatzfehlergröße mittels der Bildung ihres Maximums herangezogen werden.

Beispielsweise ist für reellwertige Ersatzfehlergrößen die Bildung *E*₃ = max(*E*₁,*E*₂) möglich, wobei *E*₁ die erste Ersatzfehlergröße, *E*₂ die zweite Ersatzfehlergröße und *E*₃ die dritte Ersatzfehlergröße bezeichnet. Im Allgemeinen kann die dritte Ersatzfehlergröße eine Funktion des Maximums von ersten und zweiten Ersatzfehlergrößen sein, wobei auch die erste und zweite Ersatzfehlergröße in die Bildung des Maximums bereits angepasst oder verändert, beispielsweise skaliert, eingehen können. Mit anderen gilt im Allgemeinen *E₃* = *f*[max(*g*(*E*₁)*, h*(*E*₂))], wobei *f, g* und *h* beliebige Funktionen oder Abhängigkeiten darstellen.

Durch die Bildung des Maximums wird ein einheitlicher Bezug zwischen den Ultraschallmessungen beziehungsweise zwischen den zwei Messdatensätzen hergestellt, der eine verbesserte Auswertung der Ultraschallprüfung ermöglicht.

Die Messdatensätze sind wenigstens einem gemeinsamen Teil des Objektes (Teil des Bereiches) zugeordnet. Mit anderen Worten ist der genannte gemeinsame Teil des Bereiches des Objektes durch den ersten und zweiten Messdatensatz erfasst.

Weiterhin können mehr als zwei Messdatensätze vorgesehen sein, wobei wiederum die Bildung des Maximums über die Mehrzahl der den Messdatensätzen zugeordneten Ersatzfehlergrößen erfolgt.

Die Ersatzfehlergrößen der Messdatensätze können wie folgt gebildet werden:
Weist beispielsweise der erste Messdatensatz ein Ultraschallamplitudensignal (abgekürzt Amplitude) für einen Defekt innerhalb des Objektes auf, so kann anhand der betragsmäßigen Amplitude diesem eine Ersatzfehlergröße, das heißt hier die erste Ersatzfehlergröße zugeordnet werden. Hierbei gibt die Ersatzfehlergröße die Dimension oder räumliche Ausdehnung eines vergleichbaren normierten und/oder definierten Defektes an. Die Ersatzfehlergröße gibt demnach nicht zwingend die tatsächliche geometrische Größe oder Ausdehnung des Defektes innerhalb des Objektes an, sondern repräsentiert aufgrund des Vergleiches der betragsmäßigen Amplituden eine dem Defekt zugeordneten normierten Defekt mit einer festgelegten geometrischen Ausdehnung.

Weiterhin können die Ersatzfehlergrößen, wie auch die Amplituden, komplexwertig sein. Hierzu wird für jedes Ultraschallamplitudensignal aus dem ersten und zweiten Messdatensatz seine zugehörige Phase ermittelt. Die ermittelte Phase entspricht dann der komplexen Phase der jeweiligen Ersatzfehlergröße. Die Ermittlung oder Bestimmung der Phase kann mittels einer Hilbert-Transformation erfolgen. Das Maximum wird jedoch über den Betrag der komplexen Ersatzfehlergrößen gebildet.

Das erfindungsgemäße Verfahren ermöglicht durch die Zusammenführung des ersten und zweiten Messdatensatzes mittels ihrer zugeordneten Ersatzfehlergrößen die Erstellung oder Bereitstellung des erfindungsgemäßen Auswertedatensatzes. Dadurch kann die Auswertung der Ultraschallprüfung des Objektes mittels eines gemeinsamen Auswertedatensatzes, der die dritte Ersatzfehlergröße aufweist, erfolgen. Mit anderen Worten ist für eine Beurteilung des Objektes nur ein einziger Auswertedatensatz zu analysieren. Dadurch wird vorteilhafterweise der Aufwand zur Beurteilung der Ultraschallprüfung verringert. Weiterhin kann vorteilhafterweise die Bewertungsqualität erhöht werden, da ein Zusammenwirken von auf unterschiedlicher Weise detektierten Defekten durch das erfindungsgemäße Verfahren berücksichtigt wird. Zudem wird eine automatisierte Auswertung, der der erstellte Auswertedatensatz zugrundeliegt, vereinfacht. Insbesondere für bruchmechanische Auswertungen ist dies von Vorteil.

Bei einer Verwendung komplexwertiger Ersatzfehlergrößen wird zudem die Nachweisgrenze verbessert, da das Signal-RauschVerhältnis (englisch: Signal-to-Noise Ratio; abgekürzt SNR) aufgrund einer Interferenz bei phasenbehafteten oder vorzeichenbehafteten Ersatzfehlergrößen verbessert wird.

Die vorliegende Erfindung schlägt somit eine Auswertung basierend auf den schlechtesten Fall (englisch: Worst-Case; auch als Worst-Case-Auswertung bezeichnet) über die Bildung des Maximums vor. Dadurch kann eine Bewertung einer Ultraschallprüfung eines Objektes, bei welcher der erstellte Auswertedatensatz verwendet wird, deutlich vereinfacht werden. Somit kann für ein Objekt, welches einer Ultraschallprüfung unterzogen wurde, eine gegebenenfalls leicht gröbere aber dafür schnellere Aussage ermittelt werden, ob Defekte des Objektes innerhalb oder außerhalb zulässiger Defektgrößen liegen.

Grundsätzlich kann der Bereich des Objektes, der dem ersten oder zweiten Messdatensatz zugrundliegt, verschieden sein, wobei die Bereiche wenigstens in einem Teil (Teil des Bereiches) überlappen sollten. Im Weiteren wird zur Vereinfachung und ohne eine Einschränkung des Schutzbereiches davon ausgegangen, dass dem ersten und zweiten Messdatensatz derselbe Bereich des Objektes zugrundeliegt. Dementsprechend liegt dem Auswertedatensatz ebenfalls derselbe Bereich des Objektes zugrunde.

Sollten die Bereiche des ersten und zweiten Messdatensatzes nicht vollständig übereinstimmen, so kann vorteilhafterweise das Volumenelement des ersten Messdatensatzes und das Volumenelement des zweiten Messdatensatzes mittels einer Translation, Rotation, Dilatation und/oder mittels eines Abtastverfahrens in Übereinstimmung gebracht werden.

Die Translation bewirkt eine Verschiebung eines Volumenelementes, die Rotation bewirkt eine Drehung eines Volumenelementes und die Dilatation bewirkt eine Streckung (oder Stauchung) eines Volumenelementes. Weiterhin kann ein nummerisches Abtastverfahren (englisch: Resampling) erfolgen, welches das Volumenelement des ersten und zweiten Messdatensatzes in Übereinstimmung bringt beziehungsweise ihren räumlichen Bezug herstellt.

Vorteilhafterweise können dadurch dem ersten und zweiten Messdatensatz jeweils grundsätzlich verschiedene Bedingungen oder Ausgestaltungen der dazugehörigen Ultraschallmessung zugrundeliegen. Der erste Messdatensatz kann mittels eines Ultraschallprüfkopfes aus einer ersten räumlichen Position und der zweite Messdatensatz mittels eines Ultraschallprüfkopfes, insbesondere mittels des gleichen Ultraschallprüfkopfes, von einer von der ersten räumlichen Position verschiedenen zweiten räumlichen Position ermittelt worden sein. Die Erfindung ermöglicht die Zusammenführung der Messdatensätze, die unter verschiedensten Bedingungen erfasst worden sind. Hierbei wird der einheitliche Bezug der Messdatensätze über die ihnen zugeordnete Ersatzfehlergröße hergestellt. Zur Erstellung des Auswertedatensatzes und somit zur Erstellung des einheitlichen Bezuges der Messdatensätze wird erfindungsgemäß das Maximum der zugeordneten Ersatzfehlergrößen herangezogen.

Gemäß einer vorteilhaften Ausgestaltung der Erfindung erfolgt vor der Bildung des Maximums eine Normierung der ersten und/oder zweiten Ersatzfehlergröße.

Mit anderen Worten wird vorteilhafterweise eine gewichtete Ersatzfehlergröße bestimmt. Beispielsweise ist eine maximal zulässige Ersatzfehlergröße für die erste Ersatzfehlergröße von einer maximal zulässigen Ersatzfehlergröße der zweiten Ersatzfehlergröße verschieden. Die erste und zweite Ersatzfehlergröße können vor der Bildung des Maximums durch ihre maximal zulässige Ersatzfehlergröße dividiert werden, das heißt auf diesen bezogen oder normiert werden. Beispielsweise gilt für reellwertige Ersatzfehlergrößen *E*₃ = max(*E*₁/*N*₁,*E*₂/*N*₂), wobei *N*₁ die maximal zulässige Ersatzfehlergröße der ersten Ersatzfehlergröße und *N*₂ die maximal zulässige Ersatzfehlergröße der zweiten Ersatzfehlergröße bezeichnet. In Bezug auf den obenstehend genannten allgemeinen Fall gilt folglich *f* = 1, *g(*E₁*)* = *E*₁/*N*₁ und *h*(*E*₂) = *E*₂/*N*₂. Dadurch können vorteilhafterweise unterschiedliche maximal zulässige Ersatzfehler, die den einzelnen Messdatensätzen zugrundeliegen, berücksichtigt werden.

In einer weiteren vorteilhaften Ausgestaltung der Erfindung basiert der erste Messdatensatz auf einer Ultraschallmessung mit einer ersten Einschallrichtung und der zweite Messdatensatz auf einer Ultraschallmessung mit einer zweiten Einschallrichtung, wobei eine von der jeweiligen Einschallrichtung abhängige Normierung der ersten und/oder zweiten Ersatzfehlergröße erfolgt.

Mit anderen Worten wird eine gewichtete dritte Ersatzfehlergröße gebildet, wobei die Gewichtung gemäß verschiedener Einschallrichtungen erfolgt. Mit anderen Worten werden die erste und zweite Einschallrichtung verschieden gewichtet. Dadurch weist die gewichtete dritte Ersatzfehlergröße eine Richtungsabhängigkeit auf. Hierzu ist es für jede Ultraschallmessung erforderlich die ortsabhängige Einschallrichtung des Ultraschalls festzuhalten oder zu ermitteln. Aus der ermittelten ortsabhängigen Einschallrichtung kann, basierend auf einer Richtcharakteristik der maximal zulässigen Ersatzfehlergröße, für die jeweilige Ersatzfehlergröße des ersten und/oder zweiten Messdatensatzes eine maximal zulässige Ersatzfehlergröße bestimmt werden. Mit anderen Worten ist die maximal zulässige Ersatzfehlergröße für jede Einschallrichtung unterschiedlich. Hierbei gibt die Richtcharakteristik die Richtungsabhängigkeit der maximal zulässigen Ersatzfehlergröße an.

Hierbei ist es bevorzugt, wenn die richtungsabhängige Normierung mittels eines Ellipsoids erfolgt, der die jeweilige Normierung in Abhängigkeit der jeweiligen Einschallrichtung festlegt.

Mit anderen Worten ist die Richtcharakteristik durch das Ellipsoid festgelegt.

Gemäß einer vorteilhaften Ausgestaltung der Erfindung basiert der erste Messdatensatz auf einer Ultraschallmessung mit einer ersten Polarisation des eingeschallten Ultraschalls und der zweite Messdatensatz auf einer Ultraschallmessung mit einer zweiten Polarisation des eingeschallten Ultraschalls, wobei eine von der jeweiligen Polarisation abhängige Normierung der ersten und/oder zweiten Ersatzfehlergröße erfolgt.

Mit anderen Worten werden für die Ultraschallmessung des ersten Messdatensatzes und für die Ultraschallmessung des zweiten Messdatensatzes verschiedene Polarisationen des verwendeten Ultraschalls berücksichtigt. Hierbei kann zwischen Transversalwellen und Longitudinalwellen unterschieden werden. Beispielsweise ist der erste Messdatensatz mittels transversal polarisierten Ultraschalls (Transversalwellen) und der zweite Messdatensatz mittels longitudinal polarisierten Ultraschalls (Longitudinalwellen) erfasst worden sein. Dadurch können vorteilhafterweise verschiedene Polarisationen der Ultraschallmessungen berücksichtigt werden sowie vorteilhaft zu einem gemeinsamen Auswertedatensatz, das heißt zum erstellten Auswertedatensatz zusammengeführt werden.

In einer vorteilhaften Weiterbildung der Erfindung basiert der erste Messdatensatz auf einer Ultraschallmessung mit einem ersten Ultraschallprüfkopf und der zweite Messdatensatz auf einer Ultraschallmessung mit einem zweiten Ultraschallprüfkopf, wobei eine vom verwendeten Ultraschallprüfkopf abhängige Normierung der ersten und/oder zweiten Ersatzfehlergröße erfolgt.

Mit anderen Worten wird dadurch vorteilhafterweise die Verschiedenheit der Ultraschallprüfköpfe bei der Zusammenführung ihrer zugehörigen Messdatensätze berücksichtigt. Hierbei drückt sich die Verschiedenheit der verwendeten Ultraschallprüfköpfe in der verschiedenen und vom Ultraschallprüfkopf abhängigen Normierung der ersten und/oder zweiten Ersatzfehlergröße aus. Weiterhin erfolgt die Normierung vor der Bildung des Maximums, sodass die Verschiedenheit der Ultraschallprüfköpfe mittels der dritten Ersatzfehlergröße und somit durch den Auswertedatensatz berücksichtigt wird.

Weitere Normierungen der ersten und/oder zweiten Ersatzfehlergröße können vor der Bildung ihres Maximums vorgesehen sein. Hierbei können die Normierungen verschiedenste Unterschiede zwischen den Ultraschallmessungen widerspiegeln oder berücksichtigen.

Insbesondere ist es von Vorteil, die jeweilige Normierung durch eine jeweilige maximal zulässige Ersatzfehlergröße festzulegen.

Besonders bevorzugt erfolgt vor der Bildung des Maximums eine von einer Verwendung des Objektes abhängige Normierung der ersten und/oder zweiten Ersatzfehlergröße.

Beispielsweise können dadurch verschieden ausgebildete Defekte, deren die erste oder zweite Ersatzfehlergröße zugeordnet ist, in Abhängigkeit der Verwendung des Objektes bewertet werden. So können radiale Defekte stärker als axiale Defekte bewertet beziehungsweise gewichtet werden. Dies ist insbesondere bei einer bruchmechanischen Auswertung von Vorteil.

Das erfindungsgemäße Verfahren zur Bewertung einer Ultraschallprüfung eines Objektes umfasst wenigstens die folgenden Schritte:
- Erstellen eines Auswertedatensatzes mittels eines Verfahrens gemäß der vorliegenden Erfindung oder einer ihrer Ausgestaltungen; und
- Bewerten von Defekten innerhalb des Objektes, insbesondere ihrer Defektgrößen, mittels des erstellten Auswertedatensatzes.

Es ergeben sich zum erfindungsgemäßen Verfahren zur Erstellung eines Auswertedatensatzes für eine Bewertung einer Ultraschallprüfung eines Objektes gleichartige und gleichwertige Vorteile des erfindungsgemäßen Verfahrens zur Bewertung einer Ultraschallprüfung eines Objektes.

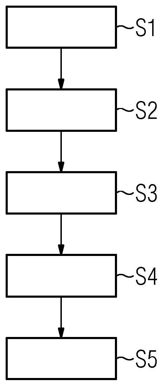

Weitere Vorteile, Merkmale und Einzelheiten der Erfindung ergeben sich aus dem im Folgenden beschriebenen Ausführungsbeispiel sowie anhand der Zeichnung. Dabei zeigt die einzige Figur ein schematisches Flussdiagramm des erfindungsgemäßen Verfahrens zur Erstellung eines Auswertedatensatzes für eine Bewertung einer Ultraschallprüfung eines Objektes, insbesondere eines Bauteils.

In einem ersten Schritt S1 des erfindungsgemäßen Verfahrens wird ein erster und zweiter Messdatensatz bereitgestellt, wobei jeder Messdatensatz auf wenigstens einer Ultraschallmessung eines Bereiches des Objektes und einer SAFT-Auswertung der Ultraschallmessung basiert. Hierbei können jedem Messdatensatz verschiedenste Bedingungen und/oder Ausgestaltungen bezüglich seiner Ultraschallmessung zugrundeliegen. Insbesondere können der erste und zweite Messdatensatz aus verschiedenen Prüfpositionen, mittels verschiedener Einschallrichtungen, mittels verschiedener Ultraschallprüfköpfe und/oder mittels verschiedener Polarisationen des eingeschallten Ultraschalls erfasst werden.

In einem zweiten Schritt S2 wird wenigstens einem Volumenelement des ersten Messdatensatzes eine erste Ersatzfehlergröße zugeordnet, wobei das Volumenelement des ersten Messdatensatzes wenigstens einem Teil des Bereiches zugeordnet ist. Mit anderen Worten weist der erste Messdatensatz wenigstens ein mittels einer SAFT-Auswertung ausgewertetes Ultraschallamplitudensignal auf, welches eine gewisse maximale betragsmäßige Amplitude aufweist. Anhand der maximalen betragsmäßigen Amplitude wird dem ausgewerteten Ultraschallamplitudensignal eine normierte oder definierte Ersatzfehlergröße zugeordnet. Dies kann insbesondere für eine Mehrzahl von Volumenelementen des Bereiches erfolgen.

In einem dritten Schritt S3 des erfindungsgemäßen Verfahrens wird ebenso einem Volumenelement des zweiten Messdatensatzes eine zweite Ersatzfehlergröße zugeordnet, wobei das Volumenelement des zweiten Messdatensatzes wenigstens dem Teil des Bereiches zugeordnet ist. Mit anderen Worten repräsentieren das Volumenelement innerhalb des ersten Messdatensatzes und das Volumenelement innerhalb des zweiten Messdatensatzes wenigstens teilweise den gleichen Teil des Bereiches des Objektes. Mit anderen Worten sollten die Messdatensätze und ihre zugordneten Volumenelemente einen räumlichen Bezug zueinander aufweisen und insbesondere wenigstens in einem Teilbereich des Bereiches (Teil des Bereiches), überlappen.

Insbesondere der zweite und dritte Schritt S2, S3 können zeitlich parallel oder zeitlich seriell ausgeführt werden.

In einem vierten Schritt S4 wird der Auswertedatensatz mit wenigstens einem Volumenelement erstellt, wobei das Volumenelement wenigstens dem Teil des Bereiches zugeordnet ist. Hierbei können grundsätzlich der erste Messdatensatz, der zweite Messdatensatz und der Auswertedatensatz verschiedene Volumenelemente, beispielsweise bezüglich ihrer Größe, ihrer Anordnung oder ihrer räumlichen Position, aufweisen. Vereinfacht kann davon ausgegangen werden, dass die genannten drei Volumenelemente übereinstimmen, wobei eine Übereinstimmung von unterschiedlichen Volumenelementen beispielsweise mittels einer Translation, Rotation, Dilatation und/oder mittels eines Abtastverfahrens erreicht werden kann.

In einem fünften Schritt S5 des erfindungsgemäßen Verfahrens wird dem Volumenelement des Auswertedatensatzes eine dritte Ersatzfehlergröße zugeordnet, wobei die dritte Ersatzfehlergröße aus dem Maximum beziehungsweise mittels des Maximums der ersten und zweiten Ersatzfehlergrößen gebildet wird. Mit anderen Worten erfolgt eine Auswertung basierend auf den schlechtesten Fall (englisch: Worst-Case; auch als Worst-Case-Auswertung bezeichnet), die dann der Bewertung einer Ultraschallprüfung des Objektes zugrundegelegt werden kann. Hierbei können die erste und zweite Ersatzfehlergröße vor der Bildung des Maximums normiert werden, wobei die Normierung verschiedene Bedingungen und Ausgestaltungen der Ultraschallmessungen, die dem ersten und zweiten Messdatensatz zugrundeliegen, berücksichtigen kann.

Weiterhin kann die Normierung mittels einer maximal zulässigen Ersatzfehlergröße erfolgen. Hierbei kann die maximal zulässige Ersatzfehlergröße beispielsweise von der Einschallrichtung des Ultraschalls, von der räumlichen Position des Ultraschallprüfkopfes und/oder von der Polarisation des eingeschallten Ultraschalls abhängig sein. Dadurch können vorteilhafterweise die verschiedensten Bedingungen der den ersten und zweiten Messdatensatz zugrundeliegenden Ultraschallmessungen bei der Erstellung des Auswertedatensatzes berücksichtigt werden. Mit anderen Worten ermöglicht die vorliegende Erfindung eine vorteilhafte, nichttriviale und synergetische Zusammenführung der zwei Messdatensätze zu dem gemeinsamen Auswertedatensatz, wobei der Auswertedatensatz die unterschiedlichen Bedingungen der jeweiligen Ultraschallmessungen berücksichtigt. Mehr als zwei Messdatensätze sowie deren erfindungsgemäßes Zusammenführen zu einem gemeinsamen Auswertedatensatz können vorgesehen sein.

Als weitere vorteilhafte Ausgestaltung der Erfindung können vor der Zusammenführung der Messdatensätze mittels der Bildung des Maximums, Amplituden, die betragsmäßig unterhalb einer Nachweisgrenze der jeweiligen Ultraschallmessung (Scan) liegen aus den Messdatensätzen entfernt werden. Hierbei kann aus dem nicht Vorhandensein von Anzeigen nur geschlossen werden, dass die jeweiligen Ultraschallamplitudensignale beziehungsweise die zugehörigen Defekte unterhalb der genannten Nachweisgrenze sind. Weiterhin kann die Bestimmung oder Festlegung der Nachweisgrenze ortsabhängig erfolgen.

Obwohl die Erfindung im Teil durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

## Patentansprüche

1. Verfahren zur Erstellung eines Auswertedatensatzes für eine Bewertung einer Ultraschallprüfung eines Objektes, umfassend die Schritte:
- Bereitstellen eines ersten und zweiten Messdatensatzes, wobei jeder Messdatensatz auf wenigstens einer Ultraschallmessung eines Bereiches des Objektes und einer SAFT-Auswertung der Ultraschallmessung basiert;
- Zuordnen einer ersten Ersatzfehlergröße zu wenigstens einem Volumenelement des ersten Messdatensatzes, wobei das Volumenelement des ersten Messdatensatzes wenigstens einem Teil des Bereiches zugeordnet ist;
- Zuordnen einer zweiten Ersatzfehlergröße zu wenigstens einem Volumenelement des zweiten Messdatensatzes, wobei das Volumenelement des zweiten Messdatensatzes wenigstens dem Teil des Bereiches zugeordnet ist;
- Erstellen des Auswertedatensatzes mit wenigstens einem Volumenelement, das wenigstens dem Teil des Bereiches zugeordnet ist; und
- Zuordnen einer dritten Ersatzfehlergröße zum Volumenelement des Auswertedatensatzes, wobei die dritte Ersatzfehlergröße aus dem Maximum der ersten und zweiten Ersatzfehlergrößen gebildet wird.

2. Verfahren gemäß Anspruch 1, bei dem das Volumenelement des ersten Messdatensatzes und das Volumenelement des zweiten Messdatensatzes mittels einer Translation, Rotation, Dilatation und/oder mittels eines Abtastverfahrens in Übereinstimmung gebracht werden.

3. Verfahren gemäß Anspruch 1 oder 2, bei dem vor der Bildung des Maximums eine Normierung der ersten und/oder zweiten Ersatzfehlergröße erfolgt.

4. Verfahren gemäß Anspruch 3, bei dem der erste Messdatensatz auf einer Ultraschallmessung mit einer ersten Einschallrichtung und der zweite Messdatensatz auf einer Ultraschallmessung mit einer zweiten Einschallrichtung basiert, und bei dem eine von der jeweiligen Einschallrichtung abhängige Normierung der ersten und/oder zweiten Ersatzfehlergröße erfolgt.

5. Verfahren gemäß Anspruch 4, bei dem die Normierung mittels eines Ellipsoids erfolgt, der die jeweilige Normierung in Abhängigkeit der jeweiligen Einschallrichtung festlegt.

6. Verfahren gemäß einem der Ansprüche 3 bis 5, bei dem der erste Messdatensatz auf einer Ultraschallmessung mit einer ersten Polarisation des eingeschallten Ultraschalls und der zweite Messdatensatz auf einer Ultraschallmessung mit einer zweiten Polarisation des eingeschallten Ultraschalls basiert, und bei dem eine von der jeweiligen Polarisation abhängige Normierung der ersten und/oder zweiten Ersatzfehlergröße erfolgt.

7. Verfahren gemäß einem der Ansprüche 3 bis 6, bei dem der erste Messdatensatz auf einer Ultraschallmessung mit einem ersten Ultraschallprüfkopf und der zweite Messdatensatz auf einer Ultraschallmessung mit einem zweiten Ultraschallprüfkopf basiert, und bei dem eine vom verwendeten Ultraschallprüfkopf abhängige Normierung der ersten und/oder zweiten Ersatzfehlergröße erfolgt.

8. Verfahren gemäß einem der Ansprüche 3 bis 7, bei dem die jeweilige Normierung durch eine jeweilige maximal zulässige Ersatzfehlergröße festgelegt wird.

9. Verfahren gemäß einem der Ansprüche 3 bis 8, bei dem vor der Bildung des Maximums eine von einer Verwendung des Objektes abhängige Normierung der ersten und/oder zweiten Ersatzfehlergröße erfolgt.

10. Verfahren zur Bewertung einer Ultraschallprüfung eines Objektes, umfassend die Schritte:
- Erstellen eines Auswertedatensatzes mittels eines Verfahrens gemäß einem der Ansprüche 1 bis 9; und
- Bewerten von Defekten innerhalb des Objektes, insbesondere ihrer Defektgrößen, mittels des erstellten Auswertedatensatzes.

## Claims

1. Method for creating an analysis data set for an evaluation of an ultrasonic test of an object, comprising the steps of:
- providing a first and second measurement data set, wherein each measurement data set is based on at least one ultrasonic measurement of a region of the object and a SAFT analysis of the ultrasonic measurement;
- associating a first equivalent defect size with a least one volume element of the first measurement data set, wherein the volume element of the first measurement data set is associated with at least a portion of the region;
- associating a second equivalent defect size with at least one volume element of the second measurement data set, wherein the volume element of the second measurement data set is associated with at least the portion of the region;
- creating the analysis data set having at least one volume element which is associated with at least the portion of the region; and
- associating a third equivalent defect size with the volume element of the analysis data set, wherein the third equivalent defect size is formed from the maximum of the first and second equivalent defect sizes.

2. Method according to Claim 1, in which the volume element of the first measurement data set and the volume element of the second measurement data set may be brought into correspondence to one another by means of a translation, rotation, dilatation, and/or by means of a resampling method.

3. Method according to Claim 1 or 2, in which a normalization of the first and/or second equivalent defect sizes takes place before the formation of the maximum.

4. Method according to Claim 3, in which the first measurement data set is based on an ultrasonic measurement having a first acoustic irradiation direction, and the second measurement data set is based on an ultrasonic measurement having a second acoustic irradiation direction, and in which a normalization of the first and/or second equivalent defect sizes takes place which is dependent on the respective acoustic irradiation direction.

5. Method according to Claim 4, in which the normalization takes place by means of an ellipsoid which determines the respective normalization as a function of the respective acoustic irradiation direction.

6. Method according to one of Claims 3 to 5, in which the first measurement data set is based on an ultrasonic measurement having a first polarization of the irradiated ultrasound, and the second measurement data set is based on an ultrasonic measurement having a second polarization of the irradiated ultrasound, and in which a normalization of the first and/or second equivalent defect sizes takes place which is dependent on the respective polarization.

7. Method according to one of Claims 3 to 6, in which the first measurement data set is based on an ultrasonic measurement using a first ultrasonic probe, and the second measurement data set is based on an ultrasonic measurement using a second ultrasonic probe, and in which a normalization of the first and/or second equivalent defect sizes takes place which is a function of the ultrasonic probe which is used.

8. Method according to one of Claims 3 to 7, in which the respective normalization is determined by means of a respective maximally permissible equivalent defect size.

9. Method according to one of Claims 3 to 8, in which a normalization of the first and/or second equivalent defect sizes which is dependent on a use of the object takes place before the formation of the maximum.

10. Method for evaluating an ultrasonic test of an object, comprising the steps of:
- creating an analysis data set by means of a method according to one of Claims 1 to 9; and
- evaluating defects within the object, in particular their defect sizes, by means of the created analysis data set.

## Revendications

1. Procédé d'établissement d'un ensemble de données d'analyse afin d'évaluer un contrôle par ultrasons d'un objet, comprenant les stades :
- on se procure un premier et un deuxième ensemble de données de mesure, chaque ensemble de données de mesure reposant sur au moins une mesure par ultrasons d'une région de l'objet et une analyse SAFT de la mesure par ultrasons,
- on associe une première grandeur d'erreur de remplacement à au moins un élément de volume du premier ensemble de données de mesure, l'élément de volume du premier ensemble de données de mesure étant associé à au moins la partie de la région,
- on associe une deuxième grandeur d'erreur de remplacement à au moins un élément de volume du deuxième ensemble de données de mesure, l'élément de volume du deuxième ensemble de données de mesure étant associé à au moins la partie de la région,
- on établit l'ensemble de données d'analyse avec au moins un élément de volume, qui est associé au moins à la partie de la région et
- on associe une troisième grandeur d'erreur de remplacement à l'élément de volume de l'ensemble de données d'analyse, la troisième grandeur d'erreur de remplacement étant formée du maximum de la première et de la deuxième grandeur d'erreur de remplacement.

2. Procédé suivant la revendication 1, dans lequel on met en coïncidence l'élément de volume du premier ensemble de données de mesure et l'élément de volume du deuxième ensemble de données de mesure au moyen d'une translation, d'une rotation, d'une dilatation et/ou au moyen d'un procédé d'étalonnage.

3. Procédé suivant la revendication 1 ou 2, dans lequel avant la formation du maximum on norme la première et/ou la deuxième grandeur d'erreur de remplacement.

4. Procédé suivant la revendication 3, dans lequel le premier ensemble de données de mesure repose sur une mesure par ultrasons avec une première direction d'entrée du son et le deuxième ensemble de données de mesure repose sur une mesure par ultrasons avec une deuxième direction d'entrée du son et dans lequel on norme la première et/ou la deuxième grandeur d'erreur de remplacement en fonction de la direction respective d'entrée du son.

5. Procédé suivant la revendication 4, dans lequel on norme au moyen d'un ellipsoïde, qui fixe la façon de normer en fonction de la direction respective d'entrée du son.

6. Procédé suivant l'une des revendications 3 à 5, dans lequel le premier ensemble de données de mesure repose sur une mesure par ultrasons ayant une première polarisation des ultrasons entrant et le deuxième ensemble de données de mesure repose sur une mesure par ultrasons ayant une deuxième polarisation des ultrasons entrant et dans lequel on norme la première et/ou la deuxième grandeur d'erreur de remplacement en fonction de la polarisation respective.

7. Procédé suivant l'une des revendications 3 à 6, dans lequel le premier ensemble de données de mesure repose sur une mesure par ultrasons par une première tête de contrôle d'ultrasons et le deuxième ensemble de données de mesure repose sur une mesure par ultrasons par une deuxième tête de contrôle d'ultrasons et dans lequel on norme la première et/ou la deuxième grandeur d'erreur de remplacement en fonction de la tête de contrôle d'ultrasons utilisée.

8. Procédé suivant l'une des revendications 3 à 7, dans lequel on fixe la façon de normer par une grandeur d'erreur de remplacement autorisée au maximum.

9. Procédé suivant l'une des revendications 3 à 8, dans lequel avant la formation du maximum, on norme la première et/ou la deuxième grandeur d'erreur de remplacement en fonction d'une utilisation de l'objet.

10. Procédé d'évaluation d'un contrôle par ultrason d'un objet comprenant les stades :
- on établit un ensemble de données d'analyse au moyen d'un procédé suivant l'une des revendications 1 à 9 et
- on évalue des défauts au sein de l'objet notamment leur grandeur de défaut, au moyen de l'ensemble de données d'analyse établi.
